# EUROPEAN PATENT APPLICATION

(11) **EP 0 917 980 A1**
(43) Date of publication of application: **26.05.1999**
(21) Application number: 97830616.5
(22) Date of filing: 21.11.1997
(51) Int. Cl.: B60L 11/00, B60L 11/18, A63G 25/00

(54) **Control device for motors on toy-vehicles**

(71) Applicant: Signal Lux Italia S.p.A., 20135 Milano (IT)
(72) Inventor: Gallone, Flavio, 22070 Fenegro(Como) (IT)
(74) Representative: Righetti, Giuseppe

(57) **Abstract**

The invention relates to a control device (1) applicable on electric toy-vehicles (2) comprising a battery (5), a first and a second electric motor (3, 4), an acceleration pedal (9), a shift lever (10) and an electrical circuit (6) connecting all electrical components. The acceleration pedal (9) is comprised in first control means (7) whilst the shift lever (10) is comprised in seven control means (8). Both control means (6, 7) engage a box structure (11) through walls thereof to switch first and second switching means (12, 13) contained in the box structure (11). The first switching means (12) are switchable to activate the motors (3, 4) and to connect thereto a brake resistor (18). The second switching means (13) are switchable to activate the reverse gear and/or to select the first or the second gear.

## Description

The present invention relates to a control device for motors on toy-vehicles comprising: first switching means operating on an electrical circuit operatively interposed between a battery and at least a first motor; second switching means operating on said electrical circuit to manage the flow of electric current between the battery and the first motor; first control means to activate selectively the first switching means; second control means to activate selectively the second switching means.

More in detail, the invention is applicable to electrical toy-vehicles comprising at least one battery to supply power to one or more electric motors activated by first switching means present on an electrical circuit. Said first switching means comprise an acceleration switch and a braking switch which are simultaneously switched by first control means essentially constituted by a pedal to which the aforementioned switches are directly associated.

When the user presses the pedal, the acceleration switch is closed allowing electric current to flow between the battery and the motors, activating the latter.

Simultaneously the braking switch is opened, said switch closing only when it is freed by the user and brought back to a rest position upon the action of a return spring. When this occurs, the acceleration switch opens thereby blocking the flow of current and the braking switch closes connecting a resistor to the motors to absorb and dissipate as heat the residual energy produced by the motors themselves as an effect of the advance of the vehicle due to inertia.

Interposed between the first switching means and the motors are present second switching means, comprising a reverse switch and a shift switch which can essentially be switched by one or more selection levers mounted on a box structure, containing the switches themselves and situated on the structure of the vehicle in a position where it can readily be reached by the user's hand.

By intervening on the selection lever, the user can switch over the reverse switch that reverses the direction of the current and thus the direction of rotation of the motors. The user can also act on the selection lever in such a way as to switch over the shift switch, which switches over the mutual connection of the motors from a series connection to a parallel connection, thereby increasing the speed of the vehicle.

It should be observed that in the device described above, each electrical component is located at a distance from the other. More in particular, the battery and a first motor are present normally in the rear part of the vehicle, a second motor is present in the front part, the pedal with the corresponding switches is located on the structure of the vehicle in a lower part thereof and the box structure with the respective electric switches is located in a raised position in proximity with the centre of the vehicle.

The applicant has found that positioning the different electrical components at a distance from each other leads to several problems.

A first problem is given by the position of the first switching means on the structure of the vehicle. Since the first switching means are located in the lower part of the vehicle, they are prone rapidly to become dirty, as the vehicle can travel over puddles, dirt or muddy roads thereby depositing water, dirt and/or other elements which are harmful to the flow of current.

Another problem also pertaining to the deposit of harmful elements is determined by the presence of numerous connections having terminations which are prone to become dirty, thus not guaranteeing the perfect operation of the electrical circuit.

The considerable distance between the various circuit components also causes undesirable voltage drops and energy losses.

According to the present invention, it was found that the problems described above can conveniently be solved, proposing a control device which encloses the contacts of the electric switches in a box made of electrically insulating material.

More particularly, the invention relates to a control device for motors on toy-vehicles characterised in that it comprises a box structure housing the first switching means and the second switching means in a space that is essentially insulated from the outside environment, said first and second control means operating on the respective switching means through at least one wall of the box structure.

Additional characteristics and advantages shall be made more evident by the detailed description of a preferred, but not exclusive, embodiment of a control device for motors on toy-vehicles. Such description shall be made hereafter with reference to the enclosed drawings, provided purely by way of non limiting indication, in which:
- Figure 1 shows a section of the device in perspective view;

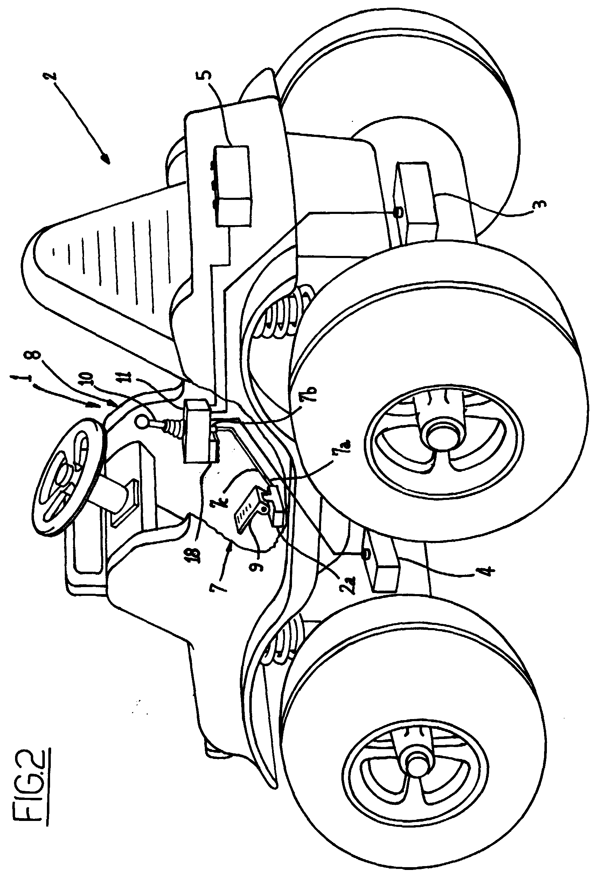

- Figure 2 shows schematically the electrical components and their connections to the control devices, set on a toy vehicle 2;
- Figure 3 shows schematically an electrical circuit wherein an acceleration pedal and a shift lever are positioned to keep the vehicle stopped;
- Figure 4 shows schematically the electrical circuit with the acceleration pedal pressed down thus determining the first gear of the vehicle;
- Figure 5 shows schematically the electrical circuit with the acceleration pedal pressed down and the shift lever inclined in a position for switching a second switching group thereby determining the second gear of the vehicle;
- Figure 6 shows schematically the electrical circuit with the pedal pressed down and the shift lever inclined in a position for switching a first switching group thereby determining the reverse gear of the vehicle.

With reference to the figures mentioned, the number 1 indicates in its entirety a control device for toy vehicles, according to the present invention.

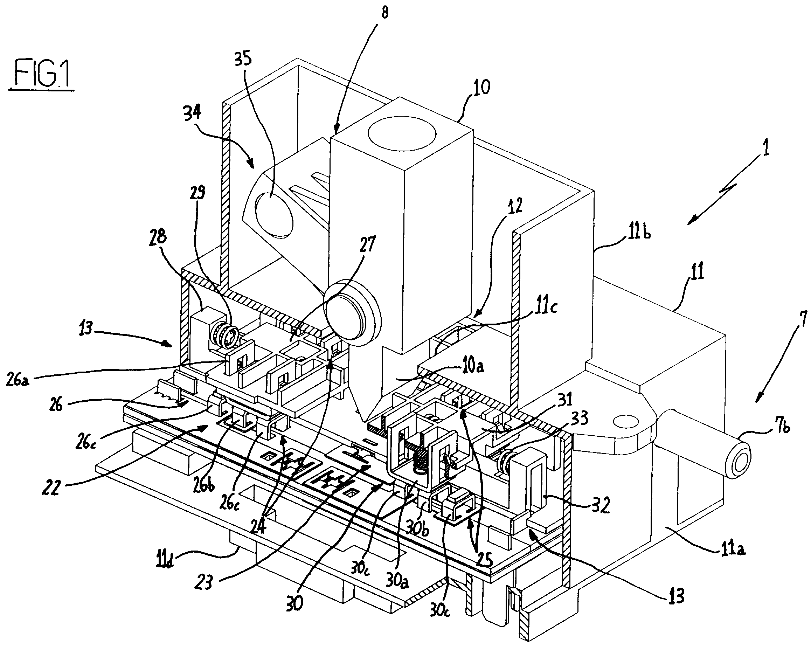

As shown schematically in Figure 1, the control device 1 can be associated to a toy vehicle 2 which usually comprises at least one electric motor 3, 4 powered by at least one battery 5 through an electrical circuit 6 whereon is operatively interposed the control device itself. In the embodiment shown the vehicle 2 presents a first electric motor 3 and a second electric motor 4.

The control device 1 is able to manage the operation of the electric motors 3, 4 as a result of the action by the user upon first and second control means 7, 8 comprising respectively an acceleration pedal 9 located in the lower part of the cockpit of the vehicle 2 and a shift lever 10 located in a position that is easily accessible to the user's hand.

To this end the control device comprises a box structure 11 housing first switching means 12 and second switching means 13 in a space that is essentially insulated from the outside environment.

The first switching means 12 can be activated by the first control means 7 which pass through a first side wall 11a of the box structure 11, to close and open selectively the electrical circuit 6 and consequently to activate and deactivate the motors 3, 4.

According to the present invention, the first control means 7 comprise a first actuator 7a engaged to a load bearing structure 2a of the vehicle 2, at least a second actuator 7b engaged to the side wall 11a of the box structure 11 and set to act on the first switching means 12 through the wall itself, and a connecting organ 7c to activate the second actuator 7b in response to the activation of the first actuator 7a.

In the embodiment shown the actuators 7a, 7b are of the fluid-powered type and the connecting organ 7c is constituted by a hydraulic duct. The first actuator 7a can be operated by means of the acceleration pedal 9 present on the load bearing structure 2a of the vehicle 2, in such a way as to thrust the liquid contained in the hydraulic duct 7c, transmitting the thrusting action to the second actuator 7b which consequently intervenes on the first switching means 12.

However, nothing prevents the actuators 7a, 7b and the connecting organ 7c from being of any other type suitable to avoid the need for an electrical connection with the acceleration pedal 9. For instance, the actuators 7a, 7b described above can be mechanical and the connecting organ 7c can be constituted by a linkage or similar organs.

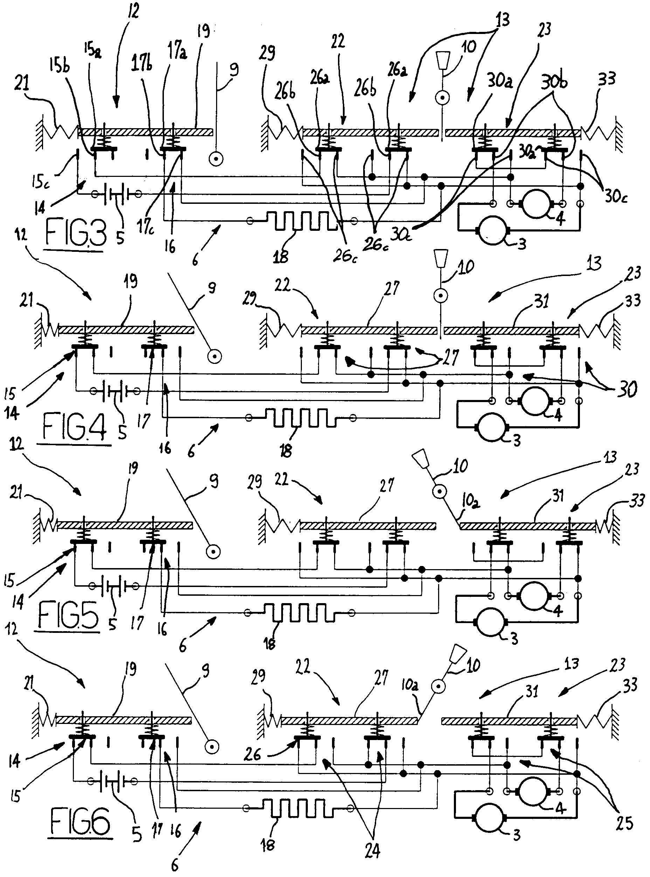

The first switching means 12 comprise at least one acceleration electrical switch 14 having first sliding contact elements 15 which comprise at least one movable acceleration contact 15a, and at least a first and a second fixed acceleration contact 15b, 15c. The first contact elements 15 are selectively switched between an opened position (Figure 3) wherein the movable acceleration contact 15a is engaged only on the first fixed acceleration contact 15b, and a closed position wherein the first movable acceleration contact 15a is engaged on both fixed acceleration contacts 15b, 15c (Figures 4-6). As shown schematically in Figure 4 the closure of said electric switch 14 connects the battery 5 to the motors 3, 4 thereby activating them.

The first switching means 12 further comprise a braking switch 16 having auxiliary contact elements 17 which comprise at least a movable braking contact 17a, at least a first and a second fixed braking contact 17b, 17c. The auxiliary contact elements 17 are selectively switched between a first operative position wherein the movable braking contact 17a is engaged on both fixed braking contacts 17b, 17c (Figure 3), and a second operative position wherein the movable braking contact 17a is engaged only on the first fixed braking contact 17b (Figures 4-6). The closure of the braking switch 16 causes a resistor 18 to be connected to the circuit 6 in series with respect to the motors 3, 4 as shown in Figure 3. In this situation the resistor 18 serves to absorb the residual kinetic energy of the vehicle 2 dissipating it as heat and generating a braking effect on the vehicle itself.

The resistor 18 can advantageously be engaged removably on an outer wall of the box structure 11, in order to be easily removed for replacement or for maintenance purposes.

The movable acceleration contact 15a and braking contact 17a are mounted on a first contact carrier 19 operatively engaged to a first guide (not visible in the drawings) fixed with respect to the box structure 11. Such first contact carrier can be translated upon the action of the first control means 7 in opposition to a first return spring 21 to move simultaneously the movable acceleration contact 15a and braking contact 17a respectively towards the closure position and towards the second operative position.

The second switching means 13 can be selectively activated by means of the second control means 8 to reverse the rotation of the electric motors 3,4 thereby allowing the vehicle 2 to move in reverse gear.

The second switching means 13 also allow to connect selectively in series or in parallel the first motor 3 to the second motor 4, modifying the speed of the vehicle 2 from a first gear speed to at least a second gear speed.

The second switching means 10 comprise to this end at least a first switching set 22 to reverse the polarity of the connection between the battery 5 and the motors 3, 4 as well as a second switching set 23 to select the speed of activation of the motor between the first gear and the second gear.

The first and the second switching sets 22, 23 comprise respectively a first pair and a second pair of switches 24, 25.

Each switch belonging to the first pair 24 is essentially constituted by second sliding contact elements 26 comprising at least a movable reverse gear contact 26a, at least one fixed main reverse gear contact 26b and at least two secondary fixed reverse gear contacts 26c. As can easily be observed by comparing Figures 3 and 6, each movable reverse gear contact 26a constantly engages the respective main fixed contact 26b and can be selectively switched to engage alternatively the two secondary fixed reverse gear contacts 26c reversing the polarity of connection between the electric motors 3, 4 and the battery 5.

The movable reverse gear contacts 26 can simultaneously be switched by means of a second contact carrier 27 engaged on a second fixed guide 28 and able to be translated upon the action of the shift lever 10 constituting the second control means 8, in opposition to the action of a second return spring 29.

To this end the shift lever 10 is preferably hinged in an extension 11b present on the box structure 11 and acts on the second switching means 13 through an upper opening 11c of the box structure 11 itself.

Each switch belonging to the second pair 25 is essentially constituted by third sliding contact elements 30 which in turn comprise at least one movable selection contact 30a, at least one main fixed selection contact 30b and at least two secondary fixed selection contacts 30c. The movable selection contact 30a constantly engages the main fixed selection contact 30b and it can be switched selectively to engage alternatively the two secondary fixed selection contacts 30c. The switch over of the second switching group 23 determines the gear shift by means of series or parallel connections of the motors 3, 4, as shown schematically in Figures 4 and 5.

The movable selection contacts 30a can be switched over simultaneously by means of a third contact carrier 31 engaged to a third fixed guide 32 and able to be translated upon the action of the shift lever 10, in opposition to the action of a third return spring 33.

When the lever 10 is in a rest position, the first switching set 22 is selected in "forward motion" condition, whilst the second switching set 23 maintains a series connection between the motors 3, 4, thereby determining the condition of advance in first gear. When the user pulls the lever in his/her direction he/she causes a lower portion 10a thereof, which is interposed between the first switching set 22 and the second switching set 23, to push the second contact carrier 27 thereby switching the first switching set 22 into the reverse gear condition.

When the user pushes the lever 10, the lower portion 10a pushes the third contact carrier 31 thereby switching the second switching set 23 into the condition of advance in second gear.

Locking means 34, comprising a sphere 35 or similar elastically preloaded elements operatively able to be engaged in corresponding seats (not visible in the drawings) set on the upper extension 11b of the box structure 11, maintain the lever 10 in the second gear position, notwithstanding the action of the third return spring 33.

According to an additional characteristic of the invention on the box structure 11 can be obtained electrical connection seats 11d to engage removably, in addition to the aforesaid resistor 18 further accessory electrical components. Such accessory electrical components can for instance comprise a relay switch (not visible in the Figures) to delay power supply to the motors 3, 4 in the motion reversal phases an/or a circuit breaker or similar safety device (not visible in the drawings) able to interrupt power supply to the motors 3, 4 to prevent them from overheating.

The present invention thus attains the proposed purposes.

All the electric switching organs are gathered and protected in the box structure 11, which can be located in a position difficult to reach by harmful external agents.

Moreover, with respect to the prior art, energy losses due to current flow in the electrical circuit 18 are reduced, to the advantage of the duration of the charge of the battery 5.

## Claims

1. Control device for motors on toy-vehicles comprising:
- first switching means (12) to close selectively an electrical circuit (6) operatively interposed between a battery (5) and at least a first motor (3);
- second switching means (13) operating on said electrical circuit (6) to manage the flow of electrical current between the battery (5) and the first motor (3);
- first control means (7) to activate selectively the first switching means (12);
- second control means (8) to activate selectively the second switching means (13);
characterised in that it comprises a box structure (11) housing the first switching means (12) and the second switching means (13) in a space that is essentially insulated from the outside environment, said first and second control means (7, 8) operating on the respective switching means (12, 13) through at least one wall of the box structure (11).

2. Device according to claim 1, characterised in that said first switching means (12) comprise at least one electrical acceleration switch (14) having first sliding contact elements (15).

3. Device according to claim 2, characterised in that said first sliding contact elements (15) comprise a movable acceleration contact (15a), a first fixed acceleration contact (15b) and a second fixed acceleration contact (15c), said first sliding contact elements (15) being selectively switchable between an opening position wherein the movable acceleration contact (15a) is engaged on the first fixed acceleration contact (15b) and a second closure position wherein the movable acceleration contact (15a) is engaged on the first fixed acceleration contact (15b) and on the second fixed acceleration contact (15c).

4. Device according to claim 3, characterised in that said first switching means (12) further comprise a first contact carrier (19) bearing the movable acceleration contact (15a), said first contact carrier being operatively engaged to a first guide that is fixed with respect to the box structure (11).

5. Device according to claim 4, characterised in that said first switching means (12) further comprise at least a first return spring (21) engaged between the first contact carrier (19) and the box structure (11).

6. Device according to claim 1, characterised in that the second switching means (13) comprise at least a first switching set (22) to reverse the polarity of connection between the battery (5) and said at least one motor (3, 4).

7. Device according to claim 6, characterised in that said first switching set (22) comprises at least a first pair (24) of switches having second sliding contact elements (26).

8. Device according to claim 7, characterised in that the second sliding contact elements (26) belonging to each of the switches comprised in said first pair (24) comprise a movable reverse gear contact (26a), a main fixed reverse gear contact (26b) and at least two secondary fixed reverse gear contacts (26c), said movable reverse gear contact (26a) constantly engaging the main fixed reverse gear contact (26b) and being selectively switchable to engage alternatively the two secondary fixed reverse gear contacts (26c).

9. Device according to claim 8, characterised in that said first switching set (22) further comprises a second contact carrier (27) bearing the movable reverse gear contacts (26a), said second contact carrier (27) being operatively engaged to a second guide (28) which is fixed with respect to the box structure (11).

10. Device according to claim 6, characterised in that the second switching means (13) further comprise a second switching set (23) to select the activation speed of the motor (3, 4) between a first and a second gear.

11. Device according to claim 10, characterised in that said second switching set (23) comprises at least a second pair (25) of switches having third sliding contact elements (30).

12. Device according to claim 11, characterised in that said third sliding contact elements (30) belonging to each switch comprised in said second pair (25) comprise at least one movable selection contact (30a), a main fixed selection contact (30b) and at least two secondary fixed selection contacts (30c), said movable selection contact (30a) constantly engaging the main fixed selection contact (30b) and being selectively switchable to engage alternatively the two secondary fixed selection contacts (30c).

13. Device according to claim 12, characterised in that said second switching set (23) further comprises a third contact carrier (31) bearing the movable selection contacts (30a), said third contact carrier (31) being operatively engaged to a third guide (32) which is fixed with respect to the box structure (11).

14. Device according to claim 1, characterised in that said first control means (7) comprise at least a first actuator (7a) engaging a load bearing structure (2a) of a toy vehicle (2) at least a second actuator (7b) engaging the box structure (11) through a side wall (11a) and a connecting organ (7c) to activate the second actuator (7b) in response to the activation of the first actuator (7a).

15. Device according to claim 14, characterised in that said actuators (7a, 7b) are constituted by fluid-powered actuators and said connecting organ (7c) is constituted by a hydraulic duct.

16. Device according to claim 1, characterised in that said second control means (8) comprise a shift lever (10) engaged in correspondence with an upper opening (11c) of the box structure (11).

17. Device according to claim 16, characterised in that said shift lever (10) comprises a lower portion (10a) selectively engaging the second shifting means (13) in a first operative position wherein said shift lever (10) switches the first switching set (22) and in a second operative position wherein said shift lever (10) switches the second switching set (13).

18. Device according to claim 1, characterised in that it further comprises a resistor (18) which can be applied interchangeably and externally to the box structure (11) and connected to the electrical circuit (6) to absorb and dissipate as heat the residual energy produced by said at least first motor (3, 4) in a braking phase.

19. Device according to claim 1, characterised in that it comprises a relay which can be engaged interchangeably and externally to the box structure (11) and connected to the electrical circuit (6).

20. Device according to claim 1, characterised in that it comprises a safety element which can be engaged interchangeably and externally to the box structure (11) to open the electrical circuit (6) in the presence of overheating conditions.
